# EUROPEAN PATENT SPECIFICATION

(11) **EP 4 721 911 B1**
(45) Date of publication and mention of the grant of the patent: **28.10.2026**
(21) Application number: 25200073.2
(22) Date of filing: 04.09.2025
(51) Int. Cl.: B23K 26/342, B23P 6/00, F01D 5/00, B33Y 80/00

(54) **SYSTEM AND METHOD FOR REPAIRING A DAMAGED BLADE OF A GAS TURBINE ENGINE**
SYSTEM UND VERFAHREN ZUR REPARATUR EINER BESCHÄDIGTEN SCHAUFEL EINES GASTURBINENMOTORS
SYSTÈME ET PROCÉDÉ DE RÉPARATION D'UNE AUBE ENDOMMAGÉE D'UN MOTEUR À TURBINE À GAZ

(30) Priority: 04.10.2024 GB 202414612
(43) Date of publication of application: 08.04.2026
(73) Proprietor: Rolls-Royce plc, London N1 9FX (GB)
(72) Inventor: Song, Jin, Derby, DE24 8BJ (GB); Litchfield, John, Derby, DE24 8BJ (GB); Lee, Andrew, Derby, DE24 8BJ (GB); Briody, Daniel, Derby, DE24 8BJ (GB)
(74) Representative: Rolls-Royce plc

(56) References cited:
- EP-A1- 3 281 725
- EP-A1- 4 342 602
- CN-A- 116 393 913
- US-A1- 2022 161 326

## Description

### FIELD

This disclosure relates to a system for repairing a damaged blade of a gas turbine engine and to a method for repairing the damaged blade of a gas turbine engine.

### BACKGROUND

Gas turbine engines have a plurality of turbines and compressors, each of which includes a disc with a number of blades. However during engine service, it is inevitable that one or more blades will be damaged due to FOD (Foreign Object Damage) and DOD (Domestic Object Damage).

The discs and the blades have tended to be separate parts with the blades being slotted in grooves that are formed in the disc. Any damaged blades have generally been replaced with new blades.

For modern gas turbine aircraft engines, the blades and disk are more commonly integrated to form a bladed disc, which minimises weight, aids assembly and reduces storage of spare parts. A disadvantage of this is the significant cost of replacing an entire bladed when only one or a few blades are damaged. This is also undesirable for resource conservation reasons, especially when the bladed disc contains critical metals, e.g. nickel or titanium.

Chinese patent application CN 116393913 A discloses a repairing device, a repairing system and a repairing method for a defective blade. The repairing device comprises a first gasket, a second gasket, a first clamp and a second clamp. The first gasket has a first clamping face that is matched with the blade shape of the pressure side of the defective face of the defective blade. The second gasket is provided with a second clamping face that is matched with the blade shape of the suction side of the defective face of the defective blade. The first clamping face and the second clamping face are opposite in a first direction. The first clamp and the second clamp are sequentially arranged in the first direction. The first clamp is connected with the second clamp. The first gasket is detachably connected to the side of the first clamp, close to the second clamp. The second gasket is detachably connected to the side of the second clamp, close to the first clamp.

United States patent application US 2022/0161326 A1 discloses a method for repairing or otherwise forming a blade of a bladed disk. The method involves positioning a shield member around a perimeter of a partial blade extending from a rotor disk of a bladed disk, the shield member being positioned adjacent to a build surface of the partial blade; and depositing, with the shield member around the perimeter of the partial blade, a material on the build surface using an additive manufacturing technique to form a repaired portion on the build surface of the partial blade.

There is a need for an improved system and method for repairing damaged gas turbine engine blades, e.g. those of a bladed disc, or at least for a system and method that provides a useful alternative to known systems and methods for repairing damaged gas turbine engine blades and bladed discs.

### SUMMARY

In a first aspect, there is provided a system for repairing a damaged blade of a gas turbine engine as set out in claim 1.

The system may be used to repair damaged blades of components, such as turbines or compressors, of the gas turbine engine such that the resulting repaired blade may have an accurate geometry, while meeting mechanical properties, such as high cycle fatigue property, of Original Equipment Manufacturer (OEM) requirements. The sacrificial build platform may prevent damage to the portion of the disc or the remaining portion of the damaged blade during the repairing of the damaged blade. Specifically, the system may provide improved component protection, as the sacrificial build platform may block any laser strikes or unwanted powder contact with the component. Further, the system allows formation of the repaired blade by depositing material layer-by-layer using adaptive tool paths. Further, the system may eliminate subsequent processing of the component by avoiding deposition of the material in vicinity of the root of the damaged blade. By using the sacrificial build platform, material can be deposited onto the damaged blade and the sacrificial build platform. In this way, the base structure that is bigger than a nominal size can be created, and further processing, such as, machining, polishing, and/or heat treatment can be employed to fully restore the damaged blade. A height of the sacrificial build platform is decided such that, an upper portion of the sacrificial build platform that is closer to the stub portion can quickly melt into a melt pool. Further, the height of the sacrificial build platform is decided to avoid distortion of the sacrificial built platform during the repairing process. The projections may provide for an interference fitting between the stub portion and the sacrificial build platform, which may eliminate a need of additional fixtures to hold the sacrificial build platform in place.

In some embodiments, a shape of each cavity is same as the shape of the root and/or the at least one stub portion of the damaged blade. This way, a portion of the root and/or the stub portion may be received within the sacrificial build platform, which may provide a build surface for material deposition and may also create a smooth transition between the root and stub portion, and the base structure of the repaired blade.

In some embodiments, a size of each cavity defined proximal to a top surface of the base is equal to or less than a size of the root of the damaged blade. This way, material can be deposited on and/or around the stub portion, which may create a smooth transition between the stub portion and the base structure of the repaired blade.

In some embodiments, at least a portion of the at least one stub portion is received within the cavites of the sacrificial build platform. This way, the material may be deposited on and/or around the stub portion to create a smooth transition between the stub portion and the base structure of the repaired blade.

In some embodiments, at least a portion of the at least one stub portion projects radially outwards from the base of the sacrificial build platform. This way, the material may be deposited around the stub portion, which may create the smooth transition between the root and stub portion, and the base structure of the repaired blade.

In some embodiments, the at least one stub portion is entirely received within the cavities of the sacrificial build platform. This way, the material may be deposited on the deposition surface of the stub portion, which may create the smooth transition between the root and stub portion, and the base structure of the repaired blade.

In some embodiments, the system further includes a removal tool for removing the sacrificial build platform from the base structure of the repaired blade after forming the base structure of the repaired blade. The removal tool may be any milling/ machining tool to remove the sacrificial build platform and restore the repaired blade to OEM dimensions.

In some embodiments, the system further includes a machining tool for machining the base structure of the repaired blade to form the repaired blade having the nominal size. The machining tool may be any milling/ machining tool to form the repaired blade having the nominal size.

In some embodiments, the system further includes a fixture configured to position the sacrificial build platform at any desired location along a radial height of the damaged blade. The fixture may allow holding and stabilisation of the sacrificial build platform at any desired location along the radial height of the damaged blade.

In some embodiments, the sacrificial build platform is manufactured using a computer-aided design (CAD) model for the repaired blade. The CAD model is generated based on an inspection of the damaged blade after removing the portion of the damaged blade. The CAD model may be used to decide dimensions of the sacrificial build platform. The CAD model may allow generation of adaptive toolpaths for depositing material to form the repaired blade.

In some embodiments, the additive manufacturing system is configured to receive instructions related to the adaptive tool paths to deposit the material on the sacrificial build platform and the deposition surface of the at least one stub portion. The adaptive tool paths are generated using the generated CAD model. The CAD model and the adaptive tool paths may allow judicious use of deposition material, to improve efficiency in both deposition of material and the machining process to restore the repaired blade to the nominal size, with zero over-hang and twists.

In some embodiments, the additive manufacturing system is a laser-based additive manufacturing system. A number of laser-based additive manufacturing system may be used to form the base structure of the repaired blade.

In a second aspect, there is provided a method for repairing a damaged blade of a gas turbine engine as set out in claim 13.

The method may be used to repair damaged blades of components, such as turbines or compressors, of the gas turbine engine such that the resulting repaired blade may have an accurate geometry, while meeting mechanical properties, such as high cycle fatigue property, of OEM requirements. The sacrificial build platform may prevent damage to the portion of the disc or the remaining portion of the damaged blade during the repairing of the damaged blade. Specifically, the method may provide improved component protection, as the sacrificial build platform may block any laser strikes or unwanted powder contact with the component. Further, the method allows formation of the repaired blade by depositing material layer-by-layer using adaptive tool paths. Further, the method may eliminate subsequent processing of the component by avoiding deposition of the material in vicinity of the root of the damaged blade. By using the sacrificial build platform, material can be deposited on the damaged blade and the sacrificial build platform. In this way, the base structure that is bigger than a nominal size can be created, and further processing, such as, machining, polishing, and/or heat treatment can be employed to fully restore the damaged blade.

In some embodiments, the method further includes removing, upon forming the base structure of the repaired blade, the sacrificial build platform from the base structure of the repaired blade. Any removal tool, such as, any milling/ machining tool may be used to remove the sacrificial build platform and restore the repaired blade to OEM dimensions.

In some embodiments, the method further includes machining, upon removing the sacrificial build platform from the base structure of the repaired blade, the base structure of the repaired blade to form the repaired blade having the nominal size. Any removal tool, such as, any milling/ machining tool may be used to form the repaired blade having the nominal size.

In some embodiments, the step of positioning the sacrificial build platform on the damaged blade further includes using a fixture to position the sacrificial build platform at any desired location along a radial height of the damaged blade.

In some embodiments, the method further includes inspecting, upon removing the portion of the damaged blade, the damaged blade to generate a computer-aided design (CAD) model for the repaired blade. The sacrificial build platform is manufactured using the generated CAD model. The CAD model may be used to decide dimensions of the sacrificial build platform. The CAD model may allow generation of adaptive toolpaths for depositing material to form the repaired blade.

In some embodiments, the method further includes generating the adaptive tool paths to deposit the material on the sacrificial build platform and the deposition surface of the at least one stub portion using the generated CAD model to form the base structure of the repaired blade. The CAD model and the adaptive tool paths may allow judicious use of deposition material, to improve efficiency in both deposition of material and the machining process to restore the repaired blade to the nominal size, with zero over-hang and twists.

In some embodiments, the gas turbine engine includes a component. The component is a compressor or a turbine. The component includes the repaired blade repaired by the method.

The details of one or more examples of the disclosure are set forth in the accompanying drawings and the description below. Other features, objects, and advantages of the disclosure will be apparent from the description and drawings, and from the claims.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from a core shaft and outputs drive to a fan so as to drive the fan at a lower rotational speed than the core shaft. The input to the gearbox may be directly from the core shaft, or indirectly from the core shaft, for example via a spur shaft and/or gear. The core shaft may rigidly connect a turbine and a compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example, the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example, the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 12 to 16, 13 to 15, or 13 to 14. The bypass duct may be substantially annular. The bypass duct may be radially outside the engine core. The radially outer surface of the bypass duct may be defined by a nacelle and/or a fan case.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of the gas turbine as described herein may have any desired number of fan blades, for example 14, 16, 18, 20, 22, 24, or 26 fan blades.

### BRIEF DESCRIPTION OF THE DRAWINGS

Embodiments will now be described by way of example only, with reference to the Figures, in which:
**FIG.** 1 shows a sectional side view of a gas turbine engine;
**FIG. 2** is a schematic perspective view of a component of the gas turbine engine of FIG. 1 having a damaged blade;
**FIG. 3A** shows a schematic perspective view of a system, including a sacrificial build platform, for repairing the damaged blade of FIG. 2;
**FIG. 3B** show a schematic perspective view of the sacrificial build platform of FIG. 3A;
**FIG. 4A** illustrates an exemplary stub portion of the damaged blade of FIG. 2;
**FIG. 4B** illustrates a perspective view of the sacrificial build platform of FIGS. 3A and 3B for the stub portion of FIG. 4A;
**FIG. 4C** illustrates the stub portion of FIG. 4A received within the sacrificial build platform of FIG. 4B;
**FIG. 5A** illustrates an exemplary stub portion of the damaged blade of FIG. 2;
**FIG. 5B** illustrates a perspective view of a sacrificial build platform for the stub portion of FIG. 5A;
**FIG. 5C** illustrates a sectional view of the sacrificial build platform of FIG. 5B;
**FIG. 5D** illustrates the stub portion of FIG. 5A received within the sacrificial build platform of FIG. 5B.
**FIG. 6A** illustrates an exemplary stub portion of the damaged blade of FIG. 2;
**FIG. 6B** illustrates a perspective view of a sacrificial build platform for the stub portion of FIG. 6A;
**FIG. 6C** illustrates the stub portion of FIG. 6A received within the sacrificial build platform of FIG. 6B;
**FIG. 7A** shows a schematic perspective view of a fixture for the system of FIG. 3A;
**FIG. 7B** shows a schematic perspective view of a fixture for the system of FIG. 3A;
**FIG.** 8 shows a schematic perspective view of an additive manufacturing system associated with the system of FIG. 3A;
**FIG.** 9 shows a schematic perspective view of a base structure of a repaired blade;
**FIG.** 10 shows a schematic perspective view of the repaired blade having a nominal size;
   and
**FIG. 11** shows a flowchart of a method for repairing the damaged blade of the gas turbine engine.

### DETAILED DESCRIPTION

Aspects and embodiments of the present disclosure will now be discussed with reference to the accompanying figures. Further aspects and embodiments will be apparent to those skilled in the art.

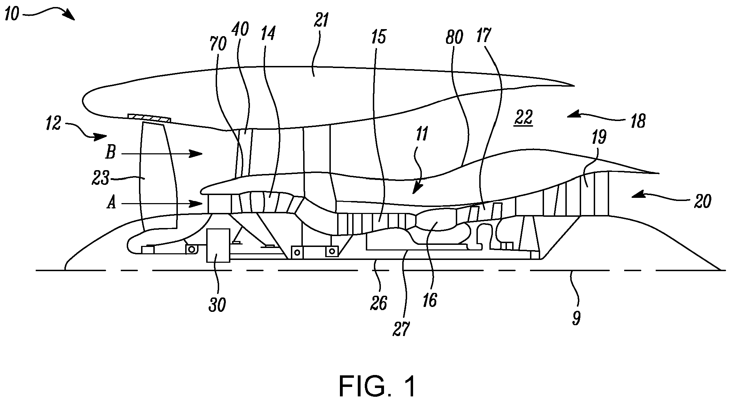

**FIG.** 1 shows a schematic side view of a gas turbine engine 10 having a principal rotational axis 9. The gas turbine engine 10 comprises an air intake 12 and a fan 23 that generates two airflows: a core airflow A and a bypass airflow B. The gas turbine engine 10 comprises an engine core 11 that receives the core airflow A. In other words, the core airflow A enters the engine core 11. The fan 23 is located upstream of the engine core 11. The fan 23 includes a plurality of blades (not shown) that upon rotating, generates the core airflow A and the bypass airflow B.

The engine core 11 comprises, in axial flow series, a compressor 14, 15, a combustor 16, and a turbine 17, 19. Specifically, the engine core 11 comprises, in axial flow series, a low pressure compressor 14, a high pressure compressor 15, a combustor 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22 surrounding the engine core 11. The bypass airflow B flows through the bypass duct 22 to provide propulsive thrust, where it is straightened by a row of outer guide vanes 40 before exiting the bypass exhaust nozzle 18. The outer guide vanes 40 extend radially outwardly from an inner ring 70 which defines a radially inner surface of the bypass duct 22. Rearward of the outer guide vanes 40, the engine core 11 is surrounded by an inner cowl 80 which provides an aerodynamic fairing defining an inner surface of the bypass duct 22. The inner cowl 80 is rearwards of and axially spaced from the inner ring 70. The inner ring 70 defines the inner surface of the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustor 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. A core shaft 27 connects the turbine 17, 19 to the compressor 14, 15. Specifically, the high pressure turbine 17 drives the high pressure compressor 15 by the suitable core shaft 27 or an interconnecting shaft. The bypass airflow B generally provides the majority of the propulsive thrust. The epicyclic gearbox 30 is a reduction gearbox.

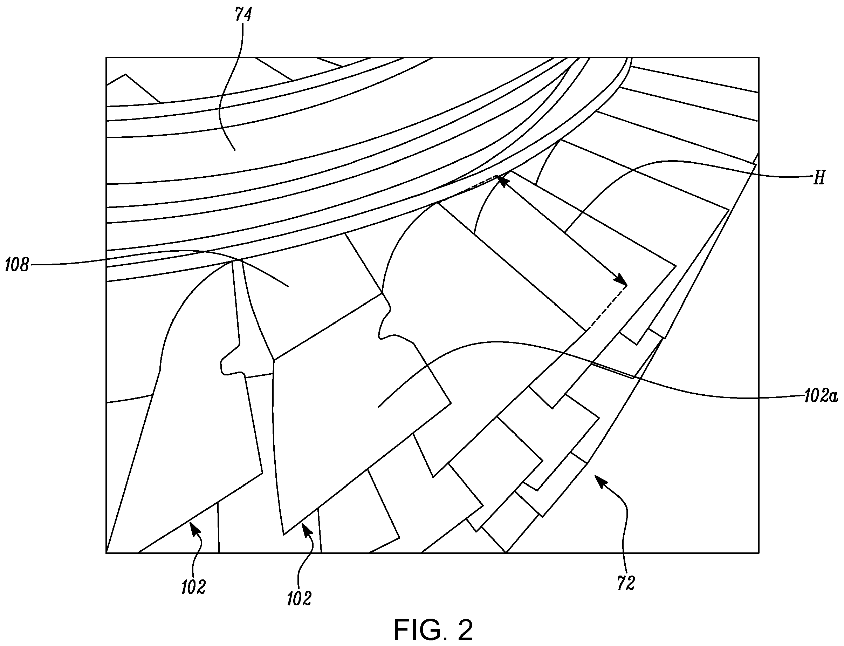

**FIG.** 2 shows a schematic perspective view of a damaged blade 102 of the gas turbine engine 10, in accordance with an embodiment of the present disclosure. The gas turbine engine 10 includes a component 72. The component 72 is the compressor 14, 15 or the turbine 17, 19. The component 72 includes a disc 74 and a number of blades extending radially from the disc 74. The component 72 also includes the damaged blade 102. Two damaged blades 102 are illustrated herein, as an example. The damaged blade 102 defines a radial height H.

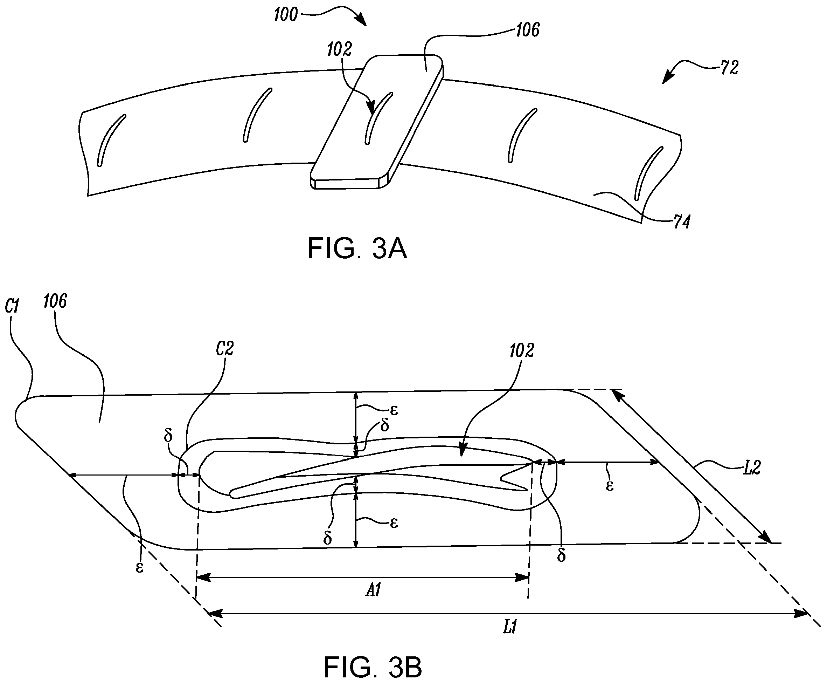

Referring to **FIGS. 3A and 3B****,** a system 100 for repairing the damaged blade 102 of the gas turbine engine 10 (shown in FIG. 1) is illustrated. The system 100 includes a sacrificial build platform 106 configured to be positioned and fused with the damaged blade 102 proximal to at least one stub portion 108 of the damaged blade 102.

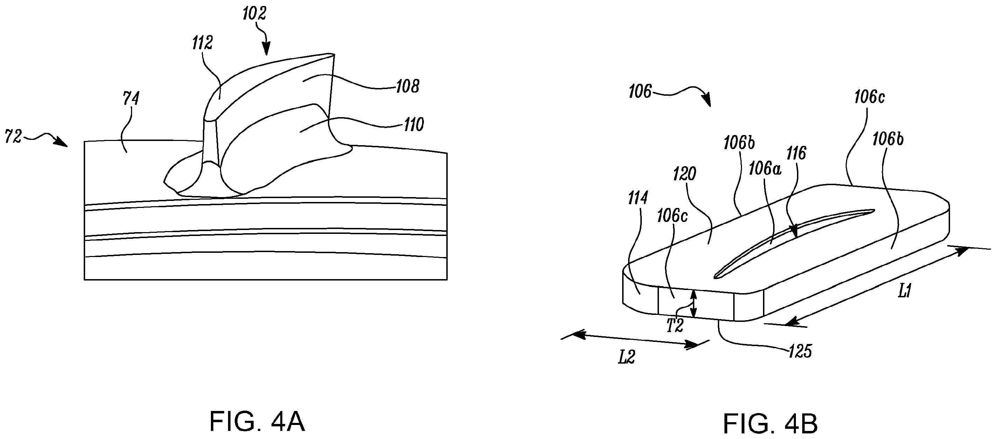

**FIG. 4A** illustrates the stub portion 108 of the damaged blade 102, in accordance with an embodiment of the present disclosure. As shown in FIG. 4A, a portion 102a (shown in FIG. 2) of the damaged blade 102 is removed from the damaged blade 102 to form the at least one stub portion 108. The at least one stub portion 108 protrudes from a root 110 of the damaged blade 102 and defines a deposition surface 112.

**FIG. 4B** illustrates a perspective view of the sacrificial build platform 106. The sacrificial build platform 106 includes a base 114 defining at least one cavity 116. The at least one cavity 116 is a single cavity 116 herein. The base 114 defines a top surface 120 and a bottom surface 125. The sacrificial build platform 106 includes a pair of first side walls 106b and a pair of second side walls 106c. Each first side wall 106b has a length L1 that is greater than a length L2 of each second side wall 106c. Thus, the sacrificial build platform 106 is substantially rectangular in shape. The sacrificial build platform 106 also defines an inner surface 106a that faces the cavity 116. A thickness T2 of the sacrificial build platform 106 is defined between the top surface 120 and the bottom surface 125. In some examples, the thickness T2 of the sacrificial build platform 106 may lie between 2 mm and 6 mm.

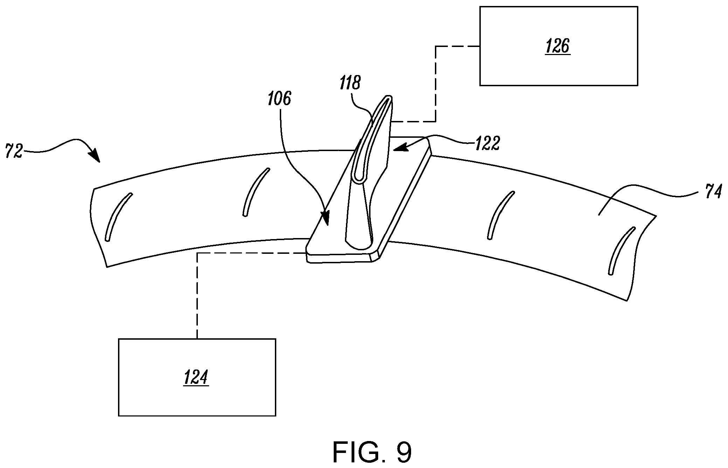

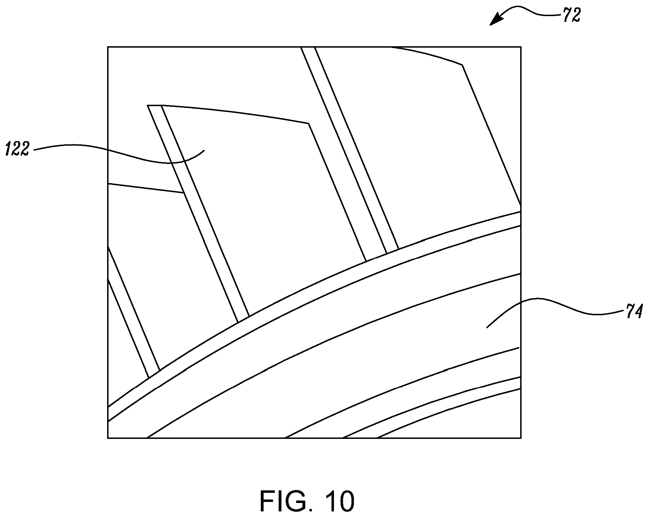

In an embodiment, the sacrificial build platform 106 is manufactured using a computer-aided design (CAD) model for a repaired blade 122 (shown in FIGS. 9 and 10). The CAD model is generated based on an inspection of the damaged blade 102 (see FIG. 2 and 4A) after removing the portion 102a (shown in FIG. 2) of the damaged blade 102. The CAD model may allow generation of adaptive toolpaths for depositing the material to form the repaired blade 122.

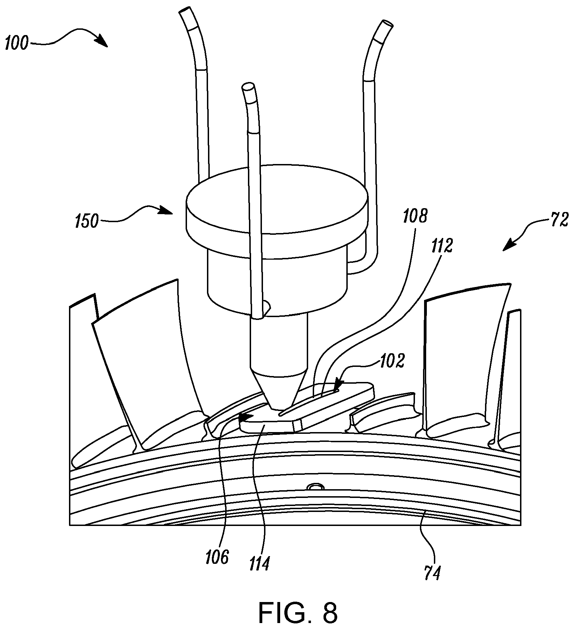

In an embodiment, an additive manufacturing system 150 (shown in FIG. 8) is configured to receive instructions related to the adaptive tool paths to deposit the material on the sacrificial build platform 106 and the deposition surface 112 of the at least one stub portion 108. The adaptive tool paths are generated using the generated CAD model. The CAD model and the adaptive tool paths may allow judicious use of deposition material, to improve efficiency in both deposition of the material and the machining process to restore the repaired blade 122 to the nominal size, with zero over-hang and twists.

Referring to FIGS. 3B and 4A, in an embodiment, the lengths L1, L2 of the first and second side walls 106b, 106c of the sacrificial build platform 106 may be a function of a span A1 of the stub portion 108 of the damaged blade 102, a distance δ between the span A1 of the stub portion 108 and the length L1, L2, and a distance ε between a contour C1 of the sacrificial build platform 106 and a contour C2 of a base structure 118 (shown in FIG. 9) of the repaired blade 122 (shown in FIG. 9). It should be noted that the shape and the size of the sacrificial build platform 106 is decided using the CAD model.

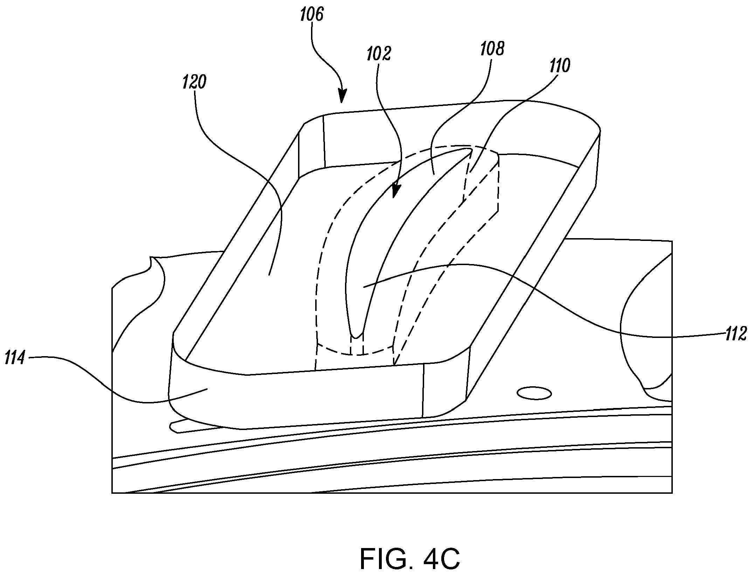

**FIG. 4C** illustrates the stub portion 108 of FIG. 4A received within the sacrificial build platform 106 of FIG. 4B. Referring to FIGS. **4B** and 4C, the damaged blade 102 is at least partially received within the at least one cavity 116. In an embodiment, a shape of the at least one cavity 116 is same as the shape of the root 110 and/or the at least one stub portion 108 of the damaged blade 102. In the embodiment illustrated in FIGS. **4B** and 4C, the shape of the at least one cavity 116 is the same as the shape of each of the root 110 and the at least one stub portion 108 of the damaged blade 102. This way, a portion of the root 110 and/or the stub portion 108 may be received within the sacrificial build platform 106, which may provide a build surface for material deposition and may also create a smooth transition between the root 110 and the stub portion 108, and the base structure 118 (shown in FIG. 9) of the repaired blade 122 (shown in FIG. 9).

In an embodiment, a size of the at least one cavity 116 defined proximal to the top surface 120 of the base 114 is equal to or less than the size of the root 110 of the damaged blade 102. In the illustrated embodiment of FIGS. **4B** and 4C, the size of the at least one cavity 116 defined proximal to the top surface 120 of the base 114 is equal to the size of the root 110 of the damaged blade 102. This way, material can be deposited on the stub portion 108, which may create the smooth transition between the stub portion 108 and the base structure 118 of the repaired blade 122.

In an embodiment, at least a portion of the at least one stub portion 108 is received within the at least one cavity 116 of the sacrificial build platform 106. In the illustrated embodiment of FIGS. 4B and 4C, the at least one stub portion 108 is entirely received within the at least one cavity 116 of the sacrificial build platform 106. This way, the material may be deposited on the deposition surface 112 (see FIG. 3A) the stub portion 108 to create a smooth transition between the stub portion 108 and the base structure 118 of the repaired blade 122. In such embodiments, the deposition surface 112 of the stub portion 108 is at the same level as the top surface 120 of the base 114

Alternatively, at least a portion of the at least one stub portion 108 may project radially outwards from the base 114 of the sacrificial build platform 106.

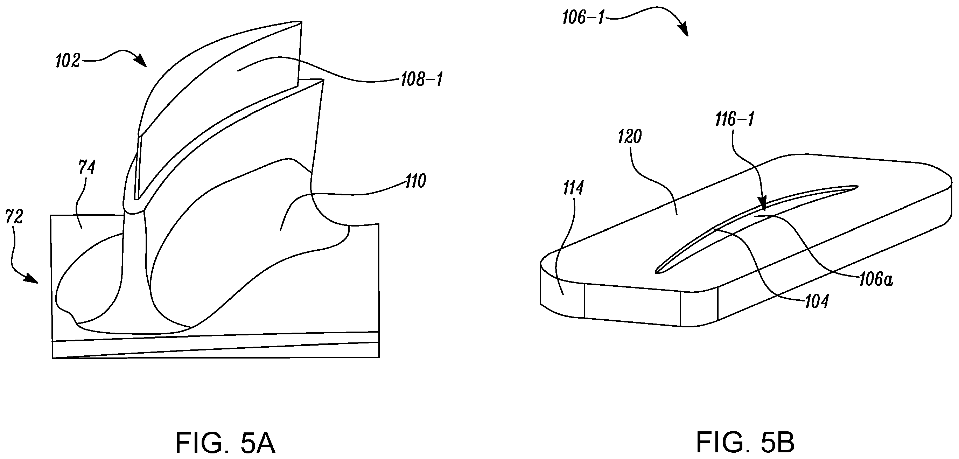

**FIG. 5A** illustrates an exemplary stub portion 108-1 of the damaged blade 102, in accordance with another embodiment of the present disclosure. In the illustrated embodiment of FIG. 5A, a size of the stub portion 108-1 is less than the size of the root 110 of the damaged blade 102, such that the stub portion 108-1 and the root 110 have a stepped profile

**FIG. 5B** illustrates a perspective view of a sacrificial build platform 106-1 for the stub portion 108-1 of FIG. 5A, in accordance with another embodiment of the present disclosure. The sacrificial build platform 106-1 is substantially similar to the sacrificial build platform 106 of FIG. 4A, with common components referred using the same reference numerals. In the illustrated embodiment of FIG. 5B, the sacrificial build platform 106-1 includes an extending portion 104 that extends from the inner surface 106a at the top surface 120 of the sacrificial build platform 106-1.

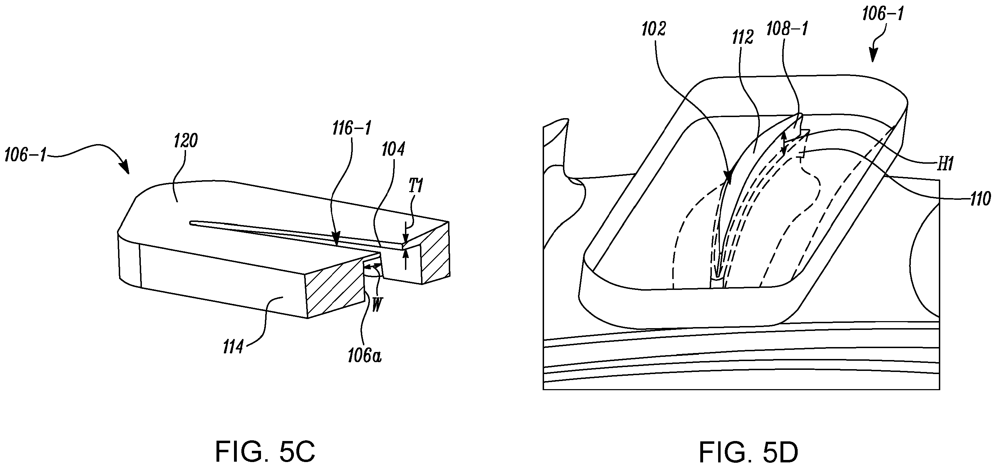

The sacrificial build platform 106-1 defines at least one cavity 116-1. In the illustrated embodiment of FIG. 5B, a shape of the at least one cavity 116-1 is the same as the shape of the root 110 and the at least one stub portion 108-1 (see FIGS. 5A and 5D) of the damaged blade 102. Further, a size of the at least one cavity 116-1 defined proximal to the top surface 120 of the base 114 is less than the root 110 of the damaged blade 102. Further, the size of the at least one cavity 116-1 defined proximal to the top surface 120 is substantially equal to the size of the stub portion 108-1.

**FIG. 5C** illustrates a sectional view of the sacrificial build platform 106-1 of FIG. 5B. Referring to FIG. 5C, a thickness T1 of the extending portion 104 may lie, for example, between 0.3 millimetre and 0.8 mm. Further, a width W of the extending portion 104 may lie, for example, between 1 mm and 3 mm.

**FIG. 5D** illustrates the stub portion 108-1 of FIG. 5A received within the sacrificial build platform 106-1 of FIG. 5B. Referring to FIG. 5D, at least a portion of the at least one stub portion 108-1 is received within the at least one cavity 116-1 of the sacrificial build platform 106-1. Moreover, in the illustrated embodiment of FIG. 5D, at least a portion of the at least one stub portion 108-1 projects radially outwards from the base 114 of the sacrificial build platform 106-1. In other words, some portion of the stub portion 108-1 is received within the cavity 116-1 and some portion of the stub portion 108-1 projects outwards from the base 114. In some examples, a height H1 of the stub portion 108-1 that projects out from the top surface 120 may lie between 0.1 mm and 0.3 mm. This way, the material may be deposited on and/or around the stub portion 108-1, which may create a smooth transition between the root 110 and stub portion 108-1, and the base structure 118 (shown in FIG. 9) of the repaired blade 122 (shown in FIG. 9).

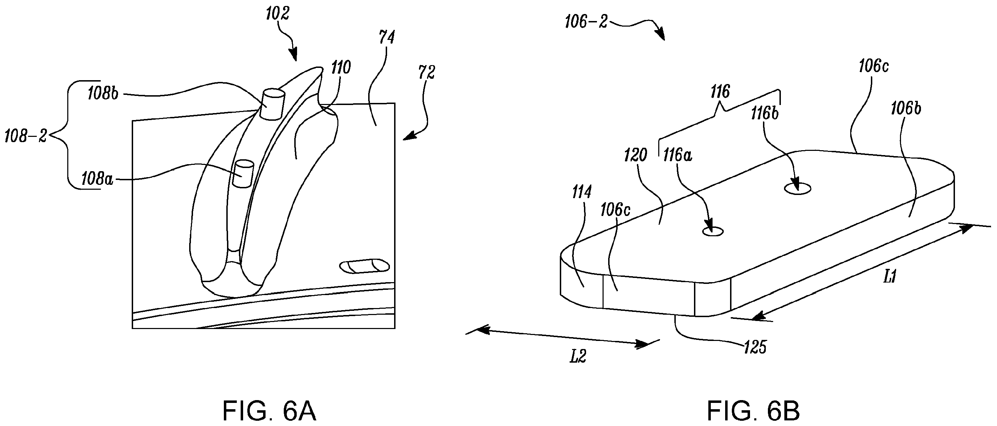

**FIG. 6A** illustrates an exemplary stub portion 108-2 of the damaged blade 102, in accordance with yet another embodiment of the present disclosure. In the illustrated embodiment of FIG. 6A, the stub portion 108-2 includes a pair of projections 108a, 108b. The projections 108a, 108b are cylindrical in shape. Alternatively, the projections 108a, 108b may have any other shape, such as, a square shape, a rectangular shape, a triangular shape, and the like.

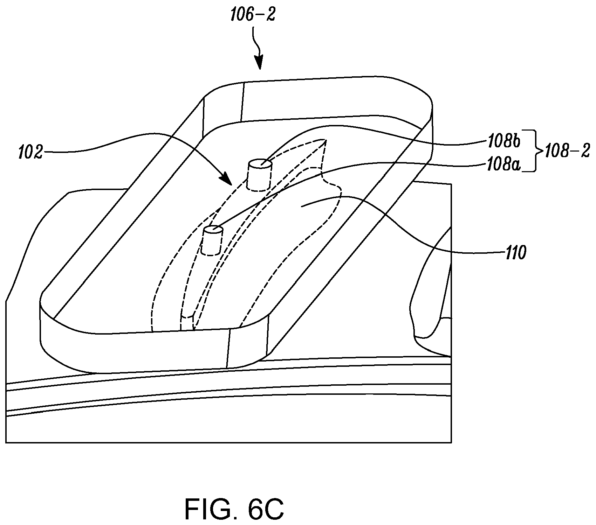

**FIG. 6B** illustrates a perspective view of a sacrificial build platform 106-2 for the stub portion 108-2 of FIG. 6A, in accordance with another embodiment of the present disclosure. In the illustrated embodiment of FIG. 6B, the at least one cavity 116 includes a pair of cavities 116a, 116b. FIG. 6C illustrates the stub portion 108-2 of FIG. 6A received within the sacrificial build platform 106-2 of FIG. 6B. Referring to FIGS. 6B and 6C, each cavity 116a, 116b from the pair of cavities 116a, 116b is configured to receive a corresponding projection 108a, 108b from the pair of projections 108a, 108b. Particularly, the cavity 116a is configured to receive the projection 108a and the cavity 116b is configured to receive the projection 108b. In the illustrated embodiment of FIGS. 6B and 6C, a shape of the at least one cavity 116 is same as the shape of the at least one stub portion 108-2 of the damaged blade 102. However, the shape of the at least one cavity 116 is different from the shape of root 110 of the damaged blade 102. The projections 108a, 108b may provide for an interference fitting between the stub portion 108-2 and the sacrificial build platform 106-2, which may eliminate a need of additional fixtures to hold the sacrificial build platform 106-2 in place.

In the embodiment illustrated on FIGS. 6B and 6C, the at least one stub portion 108-2 is entirely received within the at least one cavity 116 of the sacrificial build platform 106-2. However, in an alternate embodiment, some portion of the at least one stub portion 108-2 may project radially outwards from the base 114 of the sacrificial build platform 106-2.

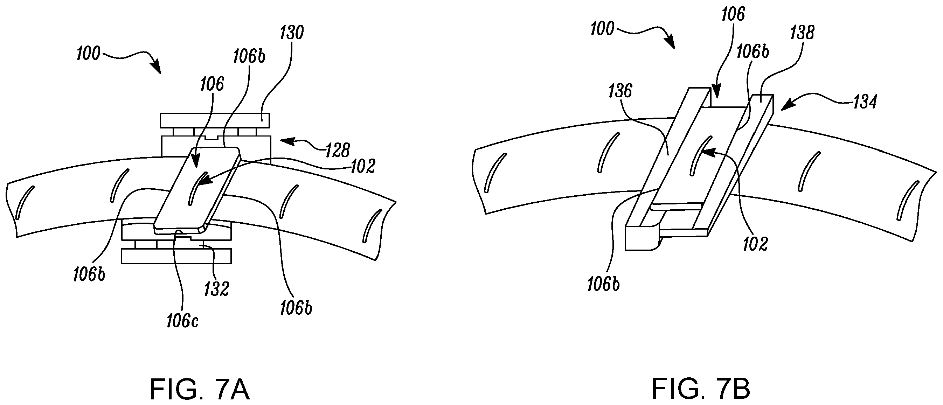

**FIG.** 7A shows a schematic perspective view of a fixture 128 for the system 100 of FIG. 3A, in accordance with an embodiment of the present disclosure. In an embodiment, the system 100 further includes the fixture 128 configured to position the sacrificial build platform 106 at any desired location along the radial height H (shown in FIG. 2) of the damaged blade 102. As shown in FIG. 7A, the fixture 128 is coupled to the sacrificial build platform 106 at each second side wall 106c of the sacrificial build platform 106. Specifically, the fixture 128 includes a first portion 130 coupled to one of the second side wall 106c, and a second portion 132 coupled to another second side wall 106c. The fixture 128 may allow holding and stabilisation of the sacrificial build platform 106 at any desired location along the radial height H of the damaged blade 102.

**FIG. 7B** shows a schematic perspective view of a fixture 134 for the system 100 of FIG. 3A, in accordance with another embodiment of the present disclosure. As shown in FIG. 7B, the fixture 128 is coupled to the sacrificial build platform 106 at each first side wall 106b of the sacrificial build platform 106. Specifically, the fixture 128 includes a first portion 136 coupled to one of the first side wall 106b, and a second portion 138 coupled to another first side wall 106b. The fixture 134 may allow holding and stabilisation of the sacrificial build platform 106 at any desired location along the radial height H (shown in FIG. 2) of the damaged blade 102.

**FIG.** 8 shows a schematic perspective view of the additive manufacturing system 150 associated with the system 100 of FIG. 3A, in accordance with an embodiment of the present disclosure.

The system 100 further includes the additive manufacturing system 150 that is configured to deposit material on the base 114 of the sacrificial build platform 106 and the deposition surface 112 of the at least one stub portion 108 to form the base structure 118 (shown in FIG. 9) of the repaired blade 122 (shown in FIG. 9). In an embodiment, the additive manufacturing system 150 is a laser-based additive manufacturing system. A number of the laser-based additive manufacturing system may be used to form the base structure 118 of the repaired blade 122.

In one embodiment, the laser-based additive manufacturing system may include a Laser Blown Powder Direct Energy Deposition (LBP-DED) system. It should be noted that the additive manufacturing system 150 may employ a Powder Bed Fusion (PBF) process, such as a Laser Powder Bed Fusion (LPBF) process, or a Directed Energy Deposition (DED) process, such as the LBP-DED process, also referred to as a laser deposition process, a blown powder additive process, a Laser Engineered Net Shaping (LENS) process, a Laser Metal Deposition (LMD) process, a Laser Cladding or Construction Laser Additive Direct (CLAD) process. The present disclosure is not limited by a type of the additive manufacturing system 150.

**FIG.** 9 shows a schematic perspective view of the base structure 118 of the repaired blade 122, in accordance with an embodiment of the present disclosure. A geometry of the base structure 118 that is produced by the additive manufacturing system 150 includes additional material, that is later removed to form the repaired blade 122 having a nominal size. A size of the base structure 118 of the repaired blade 122 is greater than a nominal size that is desired for the repaired blade 122.

In an embodiment, the system 100 further includes a removal tool 124 for removing the sacrificial build platform 106 from the base structure 118 of the repaired blade 122 after forming the base structure 118 of the repaired blade 122. In some examples, the removal tool 124 may include a 5-axes milling system. The removal tool 124 may include any milling/ machining tool to remove the sacrificial build platform 106 and restore the repaired blade 122 to OEM dimensions.

In an embodiment, the system 100 further includes a machining tool 126 for machining the base structure 118 of the repaired blade 122 to form the repaired blade 122 (shown in FIG. 10) having the nominal size. The machining tool 126 may be any milling/ machining tool to form the repaired blade 122 having the nominal size. In some examples, the machining tool 126 may include a 5-axes milling system.

**FIG.** 10 shows a schematic perspective view of the repaired blade 122 having the nominal size, in accordance with an embodiment of the present disclosure.

Referring to FIGS. 1 to 10, the system 100 may be used to repair the damaged blades 102 of the component 72, which may include the turbine 17, 19 or the compressor 14, 15, of the gas turbine engine 10 such that the resulting repaired blade 122 may have an accurate geometry, while meeting mechanical properties, such as high cycle fatigue property, of the Original Equipment Manufacturer (OEM) requirements. The sacrificial build platform 106, 106-1, 106-2 may prevent damage to the portion of the disc 74 or the remaining portion of the damaged blade 102 during the repairing of the damaged blade 102. Specifically, the system 100 may provide improved component protection, as the sacrificial build platform 106, 106-1, 106-2 may block any laser strikes or unwanted powder contact with the component 72. Further, the system 100 allows formation of the repaired blade 122 by depositing material layer-by-layer using adaptive tool paths. Further, the system 100 may eliminate subsequent processing of the component 72 by avoiding deposition of the material in vicinity of the root 110 of the damaged blade 102. In this way, the base structure 118 that is bigger than a nominal size can be created, and further processing, such as, machining, polishing, and/or heat treatment can be employed to fully restore the damaged blade 102. A height of the sacrificial build platform 106, 106-1, 106-2 is decided such that, an upper portion of the sacrificial build platform 106, 106-1, 106-2 that is closer to the stub portion 108, 108-1, 108-2 can quickly melt into a melt pool. Further, the height of the sacrificial build platform 106, 106-1, 106-2 is decided to avoid distortion of the sacrificial built platform during the repairing process.

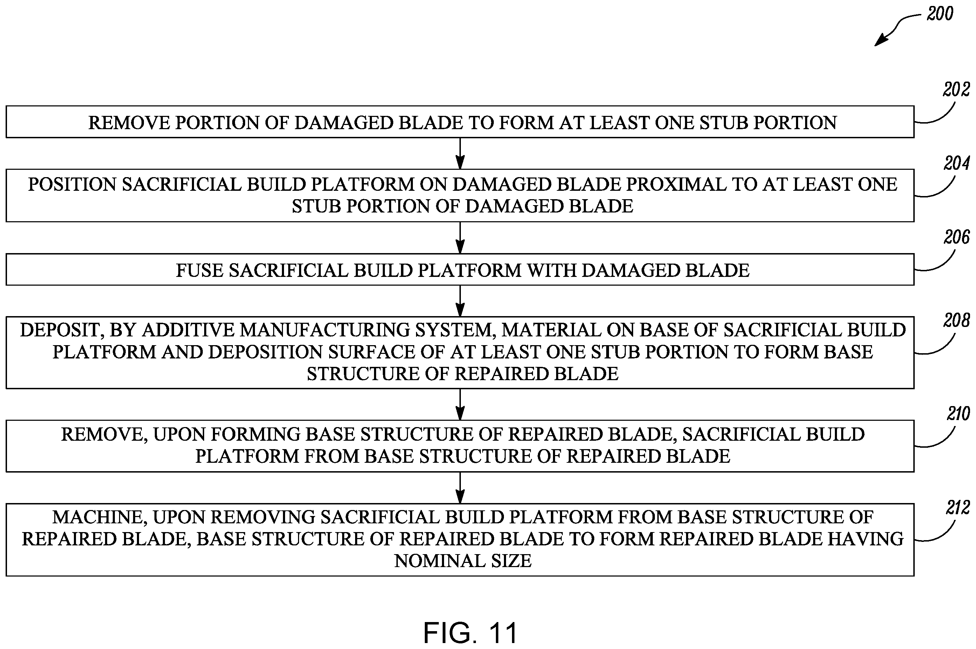

**FIG. 11** shows a flowchart depicting a method 200 for repairing the damaged blade 102 of the gas turbine engine 10, in accordance with an embodiment of the present disclosure. The method 200 may be employed for repairing the damaged blade 102 of the gas turbine engine 10 (shown in FIG. 1). The method 200 will be described with reference to FIGS. 2 to 10.

At step 202, the method 200 includes removing the portion 102a of the damaged blade 102 to form the at least one stub portion 108, 108-1, 108-2. The at least one stub portion 108, 108-1, 108-2 protrudes from the root 110 of the damaged blade 102 and defines the deposition surface 112. In an embodiment, the method 200 includes removing the portion 102a of the damaged blade 102 to form the at least one stub portion 108, 108-1, 108-2.

In an embodiment, the method 200 further includes inspecting, upon removing the portion 102a of the damaged blade 102, the damaged blade 102 to generate the CAD model for the repaired blade 122. The sacrificial build platform 106, 106-1, 106-2 is manufactured using the generated CAD model.

At step 204, the method 200 further includes positioning the sacrificial build platform 106, 106-1, 106-2 on the damaged blade 102 proximal to the at least one stub portion 108, 108-1, 108-2 of the damaged blade 102. The sacrificial build platform 106, 106-1, 106-2 includes the base 114 defining the at least one cavity 116. The damaged blade 102 is at least partially received within the at least one cavity 116 of the sacrificial build platform 106, 106-1, 106-2. In an embodiment, the method 200 further includes positioning the sacrificial build platform 106, 106-1, 106-2 on the damaged blade 102 proximal to the at least one stub portion 108, 108-1, 108-2 of the damaged blade 102.

In an embodiment, the step 204 of positioning the sacrificial build platform 106, 106-1, 106-2 on the damaged blade 102 further includes using the fixture 128, 134 to position the sacrificial build platform 106, 106-1, 106-2 at any desired location along the radial height H of the damaged blade 102.

At step 206, the method 200 further includes fusing the sacrificial build platform 106, 106-1, 106-2 with the damaged blade 102.

At step 208, the method 200 further includes depositing, by the additive manufacturing system 150, the material on the base 114 of the sacrificial build platform 106, 106-1, 106-2 and the deposition surface 112 of the at least one stub portion 108, 108-1, 108-2 to form the base structure 118 of the repaired blade 122. In an embodiment, the method 200 further includes depositing, by the additive manufacturing system 150, the material on the base 114 of the sacrificial build platform 106, 106-1, 106-2 and the deposition surface 112 of the at least one stub portion 108, 108-1, 108-2 to form the base structure 118 of the repaired blade 122.

In an embodiment, the method 200 further includes generating the adaptive tool paths to deposit the material on the sacrificial build platform 106, 106-1, 106-2 and the deposition surface 112 of the at least one stub portion 108, 108-1, 108-2 using the generated CAD model to form the base structure 118 of the repaired blade 122.

At step 210, the method 200 further includes removing, upon forming the base structure 118 of the repaired blade 122, the sacrificial build platform 106, 106-1, 106-2 from the base structure 118 of the repaired blade 122. In an embodiment, the method 200 further includes removing, upon forming the base structure 118 of the repaired blade 122, the sacrificial build platform 106, 106-1, 106-2 from the base structure 118 of the repaired blade 122.

At step 212, the method 200 further includes machining, upon removing the sacrificial build platform 106, 106-1, 106-2 from the base structure 118 of the repaired blade 122, the base structure 118 of the repaired blade 122 to form the repaired blade 122 having the nominal size. In an embodiment, the method 200 further includes machining, upon removing the sacrificial build platform 106, 106-1, 106-2 from the base structure 118 of the repaired blade 122, the base structure 118 of the repaired blade 122 to form the repaired blade 122 having the nominal size.

Referring to FIGS. 1, 2, 10, and 11, in an embodiment, the gas turbine engine 10 includes the component 72. The component 72 is the compressor 14, 15 or the turbine 17, 19. The component 72 includes the repaired blade 122 repaired by the method 200.

Referring now to FIGS. 1 to 11, the method 200 may be used to repair the damaged blades 102 of the component 72, which may include the turbine 17, 19 or the compressor 14, 15, of the gas turbine engine 10 such that the resulting repaired blade 122 may have an accurate geometry, while meeting mechanical properties, such as high cycle fatigue property, of the OEM requirements. The sacrificial build platform 106, 106-1, 106-2 may prevent damage to the portion of the disc 74 or the remaining portion of the damaged blade 102 during the repairing of the damaged blade 102. Specifically, the method 200 may provide improved component protection, as the sacrificial build platform 106, 106-1, 106-2 may block any laser strikes or unwanted powder contact with the component 72. Further, the method 200 allows formation of the repaired blade 122 by depositing material layer-by-layer using adaptive tool paths. Further, the method 200 may eliminate subsequent processing of the component 72 by avoiding deposition of the material in vicinity of the root 110 of the damaged blade 102. and the sacrificial build platform 106, 106-1, 106-2. In this way, the base structure 118 that is bigger than a nominal size can be created, and further processing, such as, machining, polishing, and/or heat treatment can be employed to fully restore the damaged blade 102. A height of the sacrificial build platform 106, 106-1, 106-2 is decided such that, an upper portion of the sacrificial build platform 106, 106-1, 106-2 that is closer to the stub portion 108, 108-1, 108-2 can quickly melt into a melt pool. Further, the height of the sacrificial build platform 106, 106-1, 106-2 is decided to avoid distortion of the sacrificial built platform during the repairing process.

## Claims

1. A system (100) for repairing a damaged blade (102) of a gas turbine engine (10), the system (100) comprising:
a sacrificial build platform (106, 106-1, 106-2) configured to be positioned and fused with the damaged blade (102) proximal to at least one stub portion (108, 108-1, 108-2) of the damaged blade (102), wherein a portion (102a) of the damaged blade (102) is removed from the damaged blade (102) to form the at least one stub portion (108, 108-1, 108-2), the at least one stub portion (108, 108-1, 108-2) protrudes from a root (110) of the damaged blade (102) and defines a deposition surface (112); and
an additive manufacturing system (150) that is configured to deposit material on the base (114) of the sacrificial build platform (106, 106-1, 106-2) and the deposition surface (112) of the at least one stub portion (108, 108-1, 108-2) to form a base structure (118) of a repaired blade (122), **characterized in that**:
the sacrificial build platform includes a base (114) defining a pair of cavities (116a, 116b), the damaged blade (102) is at least partially received within the cavities (116, 116-1), the at least one stub portion (108-2) includes a pair of projections (108a, 108b), each cavity (116a, 116b) is configured to receive a corresponding projection (108a, 108b) from the pair of projections (108a, 108b).

2. The system (100) of claim 1, wherein a shape of each cavity (116a, 116b) is the same as the shape of the root (110) and/or the at least one stub portion (108, 108-1, 108-2) of the damaged blade (102).

3. The system (100) of claim 1 or 2, wherein a size of each cavity (116a, 116b) defined proximal to a top surface (120) of the base (114) is equal to or less than a size of the at least one stub portion (108, 108-1, 108-2) of the damaged blade (102).

4. The system (100) of any preceding claim, wherein at least a portion of the at least one stub portion (108, 108-1, 108-2) is received within the cavities (116a, 116b) of the sacrificial build platform (106, 106-1, 106-2).

5. The system (100) of any preceding claim, wherein at least a portion of the at least one stub portion (108-1) projects radially outwards from the base (114) of the sacrificial build platform (106-1).

6. The system (100) of any preceding claim, wherein the at least one stub portion (108, 108-2) is entirely received within the cavities (116a, 116b) of the sacrificial build platform (106, 106-2).

7. The system (100) of any preceding claim, further comprising a removal tool (124) for removing the sacrificial build platform (106, 106-1, 106-2) from the base structure (118) of the repaired blade (122) after forming the base structure (118) of the repaired blade (122).

8. The system (100) of any preceding claim, further comprising a machining tool (126) for machining the base structure (118) of the repaired blade (122) to form the repaired blade (122) having a nominal size.

9. The system (100) of any preceding claim, further comprising a fixture (128, 134) configured to position the sacrificial build platform (106, 106-1, 106-2) at any desired location along a radial height (H) of the damaged blade (102).

10. The system (100) of any preceding claim, wherein the sacrificial build platform (106, 106-1, 106-2) is manufactured using a computer-aided design (CAD) model for the repaired blade (122), the CAD model is generated based on an inspection of the damaged blade (102) after removing the portion (102a) of the damaged blade (102).

11. The system (100) of claim 10, wherein the additive manufacturing system (150) is configured to receive instructions related to adaptive tool paths to deposit the material on the sacrificial build platform (106, 106-1, 106-2) and the deposition surface (112) of the at least one stub portion (108, 108-1, 108-2), the adaptive tool paths are generated using the generated CAD model.

12. The system (100) of any preceding claim, wherein the additive manufacturing system (150) is a laser-based additive manufacturing system.

13. A method (200) for repairing a damaged blade (102) of a gas turbine engine (10), the method (200) comprising:
removing a portion (102a) of the damaged blade (102) to form at least one stub portion (108, 108-1, 108-2), wherein the at least one stub portion (108, 108-1, 108-2) protrudes from a root (110) of the damaged blade (102) and defines a deposition surface (112);
positioning a sacrificial build platform (106, 106-1, 106-2) on the damaged blade (102) proximal to the at least one stub portion (108, 108-1, 108-2) of the damaged blade (102);
**fusing the** sacrificial build platform (106, 106-1, 106-2) with the damaged blade (102); and
depositing, by an additive manufacturing system (150), material on the base (114) of the sacrificial build platform (106, 106-1, 106-2) and the deposition surface (112) of the at least one stub portion (108, 108-1, 108-2) to form a base structure (118) of a repaired blade (122), **characterized in that**:
the sacrificial build platform (106, 106-1, 106-2) includes a base (114) defining a pair of cavities (116a, 116b), the damaged blade (102) is at least partially received within the cavities (116a, 116b) of the sacrificial build platform (106, 106-1, 106-2), the at least one stub portion (108-2) includes a pair of projections (108a, 108b), each cavity (116a, 116b) is configured to receive a corresponding projection (108a, 108b) from the pair of projections (108a, 108b).

14. The method (200) of claim 13, further comprising:
removing, upon forming the base structure (118) of the repaired blade (122), the sacrificial build platform (106, 106-1, 106-2) from the base structure (118) of the repaired blade (122); and optionally further comprising:
machining, upon removing the sacrificial build platform (106, 106-1, 106-2) from the base structure (118) of the repaired blade (122), the base structure (118) of the repaired blade (122) to form the repaired blade (122) having a nominal size.

15. The method (200) of claim 13 or 14, wherein the step (204) of positioning the sacrificial build platform (106, 106-1, 106-2) on the damaged blade (102) further includes using a fixture (128, 134) to position the sacrificial build platform (106, 106-1, 106-2) at any desired location along a radial height (H) of the damaged blade (102).

## Patentansprüche

1. System (100) zur Reparatur einer beschädigten Schaufel (102) eines Gasturbinenmotors (10), wobei das System (100) Folgendes umfasst:
eine Opferbauplattform (106, 106-1, 106-2), die dazu konfiguriert ist, mit der beschädigten Schaufel (102) proximal zu zumindest einem Stummelabschnitt (108, 108-1, 108-2) der beschädigten Schaufel (102) positioniert und verschmolzen zu werden, wobei ein Abschnitt (102a) der beschädigten Schaufel (102) von der beschädigten Schaufel (102) entfernt wird, um den zumindest einen Stummelabschnitt (108, 108-1, 108-2) zu bilden, wobei der zumindest eine Stummelabschnitt (108, 108-1, 108-2) von einem Fuß (110) der beschädigten Schaufel (102) vorsteht und eine Abscheidefläche (112) definiert; und
ein additives Fertigungssystem (150), das dazu konfiguriert ist, Material auf der Basis (114) der Opferbauplattform (106, 106-1, 106-2) und der Abscheidefläche (112) des zumindest einen Stummelabschnittes (108, 108-1, 108-2) abzuscheiden, um eine Basisstruktur (118) einer reparierten Schaufel (122) zu bilden, **dadurch gekennzeichnet, dass**:
die Opferbauplattform eine Basis (114) beinhaltet, die ein Paar Hohlräume (116a, 116b) definiert, die beschädigte Schaufel (102) zumindest teilweise innerhalb der Hohlräume (116, 116-1) aufgenommen ist, der zumindest eine Stummelabschnitt (108-2) ein Paar Vorsprünge (108a, 108b) beinhaltet, jeder Hohlraum (116a, 116b) dazu konfiguriert ist, einen entsprechenden Vorsprung (108a, 108b) von dem Paar Vorsprünge (108a, 108b) aufzunehmen.

2. System (100) nach Anspruch 1, wobei eine Form jedes Hohlraums (116a, 116b) die gleiche wie die Form des Fußes (110) und/oder des zumindest einen Stummelabschnittes (108, 108-1, 108-2) der beschädigten Schaufel (102) ist.

3. System (100) nach Anspruch 1 oder 2, wobei eine Größe jedes Hohlraums (116a, 116b), der proximal zu einer oberen Fläche (120) der Basis (114) definiert ist, gleich oder kleiner als eine Größe des zumindest einen Stummelabschnittes (108, 108-1, 108-2) der beschädigten Schaufel (102) ist.

4. System (100) nach einem vorhergehenden Anspruch, wobei zumindest ein Abschnitt des zumindest einen Stummelabschnittes (108, 108-1, 108-2) innerhalb der Hohlräume (116a, 116b) der Opferbauplattform (106, 106-1, 106-2) aufgenommen ist.

5. System (100) nach einem vorhergehenden Anspruch, wobei zumindest ein Abschnitt des zumindest einen Stummelabschnittes (108-1) von der Basis (114) der Opferbauplattform (106-1) radial nach außen vorspringt.

6. System (100) nach einem vorhergehenden Anspruch, wobei der zumindest eine Stummelabschnitt (108, 108-2) vollständig innerhalb der Hohlräume (116a, 116b) der Opferbauplattform (106, 106-2) aufgenommen ist.

7. System (100) nach einem vorhergehenden Anspruch, ferner umfassend ein Entfernungswerkzeug (124) zum Entfernen der Opferbauplattform (106, 106-1, 106-2) von der Basisstruktur (118) der reparierten Schaufel (122) nach dem Bilden der Basisstruktur (118) der reparierten Schaufel (122).

8. System (100) nach einem vorhergehenden Anspruch, ferner umfassend ein Bearbeitungswerkzeug (126) zum Bearbeiten der Basisstruktur (118) der reparierten Schaufel (122), um die reparierte Schaufel (122) mit einer Nenngröße zu bilden.

9. System (100) nach einem vorhergehenden Anspruch, ferner umfassend eine Halterung (128, 134), die dazu konfiguriert ist, die Opferbauplattform (106, 106-1, 106-2) an einer beliebigen gewünschten Stelle entlang einer radialen Höhe (H) der beschädigten Schaufel (102) zu positionieren.

10. System (100) nach einem vorhergehenden Anspruch, wobei die Opferbauplattform (106, 106-1, 106-2) unter Verwendung eines computergestützten Design(CAD-)Modells für die reparierte Schaufel (122) gefertigt wird, wobei das CAD-Modell basierend auf einer Inspektion der beschädigten Schaufel (102) nach dem Entfernen des Abschnittes (102a) der beschädigten Schaufel (102) erzeugt wird.

11. System (100) nach Anspruch 10, wobei das additive Fertigungssystem (150) dazu konfiguriert ist, Anweisungen in Bezug auf adaptive Werkzeugwege zu empfangen, um das Material auf der Opferbauplattform (106, 106-1, 106-2) und der Abscheidefläche (112) des zumindest einen Stummelabschnittes (108, 108-1, 108-2) abzuscheiden, wobei die adaptiven Werkzeugwege unter Verwendung des erzeugten CAD-Modells erzeugt werden.

12. System (100) nach einem vorhergehenden Anspruch, wobei das additive Fertigungssystem (150) ein laserbasiertes additives Fertigungssystem ist.

13. Verfahren (200) zur Reparatur einer beschädigten Schaufel (102) eines Gasturbinenmotors (10), wobei das Verfahren (200) Folgendes umfasst:
Entfernen eines Abschnittes (102a) der beschädigten Schaufel (102), um zumindest einen Stummelabschnitt (108, 108-1, 108-2) zu bilden, wobei der zumindest eine Stummelabschnitt (108, 108-1, 108-2) von einem Fuß (110) der beschädigten Schaufel (102) vorsteht und eine Abscheidefläche (112) definiert;
Positionieren einer Opferbauplattform (106, 106-1, 106-2) auf der beschädigten Schaufel (102) proximal zu dem zumindest einen Stummelabschnitt (108, 108-1, 108-2) der beschädigten Schaufel (102);
Verschmelzen der Opferbauplattform (106, 106-1, 106-2) mit der beschädigten Schaufel (102); und
Abscheiden, durch ein additives Fertigungssystem (150), von Material auf der Basis (114) der Opferbauplattform (106, 106-1, 106-2) und der Abscheidefläche (112) des zumindest einen Stummelabschnittes (108, 108-1, 108-2), um eine Basisstruktur (118) einer reparierten Schaufel (122) zu bilden, **dadurch gekennzeichnet, dass**:
die Opferbauplattform (106, 106-1, 106-2) eine Basis (114) beinhaltet, die ein Paar Hohlräume (116a, 116b) definiert, die beschädigte Schaufel (102) zumindest teilweise innerhalb der Hohlräume (116a, 116b) der Opferbauplattform (106, 106-1, 106-2) aufgenommen ist, der zumindest eine Stummelabschnitt (108-2) ein Paar Vorsprünge (108a, 108b) beinhaltet, jeder Hohlraum (116a, 116b) dazu konfiguriert ist, einen entsprechenden Vorsprung (108a, 108b) von dem Paar Vorsprünge (108a, 108b) aufzunehmen.

14. Verfahren (200) nach Anspruch 13, ferner umfassend:
Entfernen, beim Bilden der Basisstruktur (118) der reparierten Schaufel (122), der Opferbauplattform (106, 106-1, 106-2) von der Basisstruktur (118) der reparierten Schaufel (122); und optional ferner umfassend:
Bearbeiten, beim Entfernen der Opferbauplattform (106, 106-1, 106-2) von der Basisstruktur (118) der reparierten Schaufel (122), der Basisstruktur (118) der reparierten Schaufel (122), um die reparierte Schaufel (122) mit einer Nenngröße zu bilden.

15. Verfahren (200) nach Anspruch 13 oder 14, wobei der Schritt (204) des Positionierens der Opferbauplattform (106, 106-1, 106-2) auf der beschädigten Schaufel (102) ferner Verwenden einer Halterung (128, 134) beinhaltet, um die Opferbauplattform (106, 106-1, 106-2) an einer beliebigen gewünschten Stelle entlang einer radialen Höhe (H) der beschädigten Schaufel (102) zu positionieren.

## Revendications

1. Système (100) de réparation d'une aube endommagée (102) d'un moteur à turbine à gaz (10), le système (100) comprenant :
une plateforme de construction sacrificielle (106, 106-1, 106-2) conçue pour être positionnée et fusionnée avec l'aube endommagée (102) à proximité d'au moins une partie de moignon (108, 108-1, 108-2) de l'aube endommagée (102), dans lequel une partie (102a) de l'aube endommagée (102) est retirée de l'aube endommagée (102) pour former l'au moins une partie de moignon (108, 108-1, 108-2), l'au moins une partie de moignon (108, 108-1, 108-2) fait saillie depuis un pied (110) de l'aube endommagée (102) et définit une surface de dépôt (112) ; et
un système de fabrication additive (150) configuré pour déposer un matériau sur la base (114) de la plateforme de construction sacrificielle (106, 106-1, 106-2) et la surface de dépôt (112) de l'au moins une partie de moignon (108, 108-1, 108-2) afin de former une structure de base (118) d'une aube réparée (122), **caractérisé en ce que** :
la plateforme de construction sacrificielle comprend une base (114) définissant une paire de cavités (116a, 116b), l'aube endommagée (102) est au moins partiellement reçue dans les cavités (116, 116-1), l'au moins une partie de moignon (108-2) comprend une paire de saillies (108a, 108b), chaque cavité (116a, 116b) est conçue pour recevoir une saillie (108a, 108b) correspondante de la paire de saillies (108a, 108b).

2. Système (100) de la revendication 1, dans lequel une forme de chaque cavité (116a, 116b) est identique à la forme du pied (110) et/ou de l'au moins une partie de moignon (108, 108-1, 108-2) de l'aube endommagée (102).

3. Système (100) de l'une des revendications 1 ou 2, dans lequel une dimension de chaque cavité (116a, 116b) définie à proximité d'une surface supérieure (120) de la base (114) est inférieure ou égale à une dimension de l'au moins une partie de moignon (108, 108-1, 108-2) de l'aube endommagée (102).

4. Système (100) d'une quelconque revendication précédente, dans lequel au moins une partie de l'au moins une partie de moignon (108, 108-1, 108-2) est reçue dans les cavités (116a, 116b) de la plateforme de construction sacrificielle (106, 106-1, 106-2).

5. Système (100) d'une quelconque revendication précédente, dans lequel au moins une partie de l'au moins une partie de moignon (108-1) fait saillie radialement vers l'extérieur depuis la base (114) de la plateforme de construction sacrificielle (106-1).

6. Système (100) d'une quelconque revendication précédente, dans lequel l'au moins une partie de moignon (108, 108-2) est entièrement reçue dans les cavités (116a, 116b) de la plateforme de construction sacrificielle (106, 106-2).

7. Système (100) d'une quelconque revendication précédente, comprenant en outre un outil de retrait (124) pour retirer la plateforme de construction sacrificielle (106, 106-1, 106-2) de la structure de base (118) de l'aube réparée (122) après la formation de la structure de base (118) de l'aube réparée (122).

8. Système (100) d'une quelconque revendication précédente, comprenant en outre un outil d'usinage (126) pour usiner la structure de base (118) de l'aube réparée (122) afin de former l'aube réparée (122) présentant une dimension nominale.

9. Système (100) d'une quelconque revendication précédente, comprenant en outre un dispositif de fixation (128, 134) conçu pour positionner la plateforme de construction sacrificielle (106, 106-1, 106-2) à un emplacement quelconque souhaité le long d'une hauteur radiale (H) de l'aube endommagée (102).

10. Système (100) d'une quelconque revendication précédente, dans lequel la plateforme de construction sacrificielle (106, 106-1, 106-2) est fabriquée en utilisant un modèle de conception assistée par ordinateur (CAO) de l'aube réparée (122), le modèle CAO est généré sur la base d'une inspection de l'aube endommagée (102) après le retrait de la partie (102a) de l'aube endommagée (102).

11. Système (100) de la revendication 10, dans lequel le système de fabrication additive (150) est configuré pour recevoir des instructions relatives à des trajectoires d'outil adaptatives afin de déposer le matériau sur la plateforme de construction sacrificielle (106, 106-1, 106-2) et la surface de dépôt (112) de l'au moins une partie de moignon (108, 108-1, 108-2), les trajectoires d'outil adaptatives sont générées en utilisant le modèle CAO généré.

12. Système (100) d'une quelconque revendication précédente, dans lequel le système de fabrication additive (150) est un système de fabrication additive à base de laser.

13. Procédé (200) de réparation d'une aube endommagée (102) d'un moteur à turbine à gaz (10), le procédé (200) comprenant :
le retrait d'une partie (102a) de l'aube endommagée (102) pour former au moins une partie de moignon (108, 108-1, 108-2), dans lequel l'au moins une partie de moignon (108, 108-1, 108-2) fait saillie depuis un pied (110) de l'aube endommagée (102) et définit une surface de dépôt (112) ;
le positionnement d'une plateforme de construction sacrificielle (106, 106-1, 106-2) sur l'aube endommagée (102) à proximité de l'au moins une partie de moignon (108, 108-1, 108-2) de l'aube endommagée (102) ;
la fusion de la plateforme de construction sacrificielle (106, 106-1, 106-2) avec l'aube endommagée (102) ; et
le dépôt, par un système de fabrication additive (150), d'un matériau sur la base (114) de la plateforme de construction sacrificielle (106, 106-1, 106-2) et la surface de dépôt (112) de l'au moins une partie de moignon (108, 108-1, 108-2) afin de former une structure de base (118) d'une aube réparée (122), **caractérisé en ce que** :
la plateforme de construction sacrificielle (106, 106-1, 106-2) comprend une base (114) définissant une paire de cavités (116a, 116b), l'aube endommagée (102) est au moins partiellement reçue dans les cavités (116a, 116b) de la plateforme de construction sacrificielle (106, 106-1, 106-2), l'au moins une partie de moignon (108-2) comprend une paire de saillies (108a, 108b), chaque cavité (116a, 116b) est conçue pour recevoir une saillie (108a, 108b) correspondante de la paire de saillies (108a, 108b).

14. Procédé (200) de la revendication 13, comprenant en outre :
après la formation de la structure de base (118) de l'aube réparée (122), le retrait de la plateforme de construction sacrificielle (106, 106-1, 106-2) de la structure de base (118) de l'aube réparée (122) ; et comprenant en outre éventuellement :
après le retrait de la plateforme de construction sacrificielle (106, 106-1, 106-2) de la structure de base (118) de l'aube réparée (122), l'usinage de la structure de base (118) de l'aube réparée (122) afin de former l'aube réparée (122) présentant une dimension nominale.

15. Procédé (200) de l'une des revendications 13 ou 14, dans lequel l'étape (204) de positionnement de la plateforme de construction sacrificielle (106, 106-1, 106-2) sur l'aube endommagée (102) comprend en outre l'utilisation d'un dispositif de fixation (128, 134) pour positionner la plateforme de construction sacrificielle (106, 106-1, 106-2) à n'importe quel emplacement souhaité le long d'une hauteur radiale (H) de l'aube endommagée (102).
